(19) **Europäisches Patentamt**
**European Patent Office**
**Office européen des brevets**

(11) **EP 3 089 528 B1**

(12) **EUROPEAN PATENT SPECIFICATION**

(45) Date of publication and mention
of the grant of the patent:
**09.01.2019 Bulletin 2019/02**

(51) Int Cl.:
*H04W 64/00* (2009.01)  *G01S 1/00* (2006.01)

(21) Application number: **16166549.2**

(22) Date of filing: **22.04.2016**

(54) **BASE STATION POSITIONING METHOD AND APPARATUS**

BASISSTATIONSPOSITIONIERUNGSVERFAHREN UND -VORRICHTUNG

PROCÉDÉ DE POSITIONNEMENT DE STATION DE BASE ET APPAREIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.04.2015 CN 201510212995**

(43) Date of publication of application:
**02.11.2016 Bulletin 2016/44**

(73) Proprietor: **Baidu Online Network Technology (Beijing)
Co., Ltd.
Beijing 100085 (CN)**

(72) Inventor: **LIU, Feng
100085 Beijing (CN)**

(74) Representative: **Papa, Elisabetta et al
Società Italiana Brevetti S.p.A
Piazza di Pietra, 39
00186 Roma (IT)**

(56) References cited:
**EP-A1- 2 530 983**      **EP-A2- 1 480 483**
**US-A1- 2007 205 941**

**Description**

<u>FIELD</u>

Embodiments of the present invention generally relate to a positioning technology, and more particularly, to a base station positioning method and apparatus.

<u>BACKGROUND</u>

Currently, a radio positioning and navigation technology has been widely applied in the business services, in which the mature positioning technology includes: Global Positioning System (GPS), Wireless Fidelity (Wi-Fi) positioning, base station positioning and Bluetooth or infrared positioning. These technologies have been widely used in people's daily life.

The so-called base station positioning means that a mobile terminal detects a downlink pilot signal sent by a base station to obtain a time difference between arrivals of different downlink pilot signals sent by the same base station, and then estimates its own position by using a triangle algorithm according to the time differences in combination with the position of the base station. In general, in order to ensure the positioning accuracy, for one position estimation, a plurality of base stations (three or more base stations) are used at the same time for performing a joint positioning.

Generally, only a few special terminals (typically, internal engineering testing machines of a terminal manufacturer) can obtain the signals from the plurality of base stations at the same time. However, the common terminal in the market can only scan the base station whose signal is the strongest at the same time, and thus can only complete the base station positioning according to one base station. In a specific positioning method, the mobile terminal is positioned to the base station whose signal is the strongest. Thus, if there is a long distance between respective base stations, the above positioning method has a poor positioning accuracy.

EP1480483 discloses: location of a mobile terminal in which the location request contains a time limit. The method selects base stations for the location procedure and first checks if stored measurement data for each base station is available within the time limit. If this is the case the method uses the stored data for the location determination and moves onto the next selected base station. If the stored data is not within the time limit, then a measurement is undertaken with the selected base station and this is used for the position determination. The method may therefore reduces the time required to acquire measurement data for the selected base stations.

<u>SUMMARY</u>

Embodiments of the present invention seek to solve at least one of the problems existing in the related art to at least some extent.

Embodiments of the present invention provide a base station positioning method and apparatus, which improves a conventional positioning method based on single base station and satisfies people's increasing requirements of personalized and accurate base station positioning.

Embodiments of a first aspect of the present invention provide a base station positioning method, including: determining a first base station currently scanned by a mobile terminal at a current scanning moment; determining at least one assistant base station from a historical base station list of the mobile terminal, in which a scanning moment of each of the at least one assistant base station is in a predetermined time range with respect to the current scanning moment, and each of the at least one assistant base station is in a predetermined space range with respect to the first base station; and positioning the mobile terminal at the current scanning moment according to locations of the first base station and the at least one assistant base station.

Embodiments of a second aspect of the present invention provide a base station positioning apparatus, including: a current base station determining module, configured to determine a first base station currently scanned by a mobile terminal at a current scanning moment; an assistant base station determining module, configured to determine at least one assistant base station from a historical base station list of the mobile terminal, in which a scanning moment of each of the at least one assistant base station is in a predetermined time range with respect to the current scanning moment, and each of the at least one assistant base station is in a predetermined space range with respect to the first base station; and a positioning module, configured to position the mobile terminal at the current scanning moment according to locations of the first base station and the at least one assistant base station.

With the base station positioning method and apparatus according to embodiments of the present invention, after the first base station currently scanned by the mobile terminal at the current scanning moment is obtained, instead of positioning the mobile terminal according to the first base station solely, the at least one assistant base station is determined according to the historical base station list of the mobile terminal, in which the scanning moment of each of the at least one assistant base station is in the predetermined time range with respect to the current scanning moment, and each of the at least one assistant base station is in the predetermined space range with respect to the first base station, and then the mobile terminal is positioned according to the locations of the first base station and the at least one assistant base station. With above technical means, when the mobile terminal is moving in the predetermined time range and in the predetermined space range, the mobile terminal can be positioned by using a plurality of surrounding base stations and the currently scanned base station, which increases the positioning basis and improves the positioning accuracy.

Additional aspects and advantages of embodiments of present invention will be given in part in the following descriptions, become apparent in part from the following descriptions, or be learned from the practice of the embodiments of the present invention.

## BRIEF DESCRIPTION OF THE DRAWINGS

These and other aspects and advantages of embodiments of the present invention will become apparent and more readily appreciated from the following descriptions made with reference to the accompanying drawings, in which:

Fig. 1 is a flow chart of a base station positioning method according to a first embodiment of the present invention;
Fig. 2 is a flow chart of a base station positioning method according to a second embodiment of the present invention;
Fig. 3 is a flow chart of a base station positioning method according to a third embodiment of the present invention;
Fig. 4 is a flow chart of a base station positioning method according to a fourth embodiment of the present invention; and
Fig. 5 is a block diagram of a base station positioning apparatus according to a fifth embodiment of the present invention.

## DETAILED DESCRIPTION

In order to make objectives, technical solutions and advantages of the present more apparent, embodiments of the present invention will be further described in details with reference to drawings in the following. It should be noted that the embodiments described herein are only intended to interpret the present invention, but not to limit the present invention. It should also be noted that the drawings only show a partial content related to the present invention, instead of all the content, for simple descriptions. Before discussing the embodiments in more details, it should be noted that some embodiments are described as processing or methods which are illustrated in flow charts. Although the flow chart illustrates respective operations (or steps) into sequential processing, many operations therein may be executed in parallel, concurrently or simultaneously. In addition, sequences of respective operations may be rearranged. When the operations are finished, the processing may be terminated, or also may include additional steps which are not included in the drawings. The processing may be corresponding to a method, a function, a regulation, a subroutine and so on.

Embodiment 1

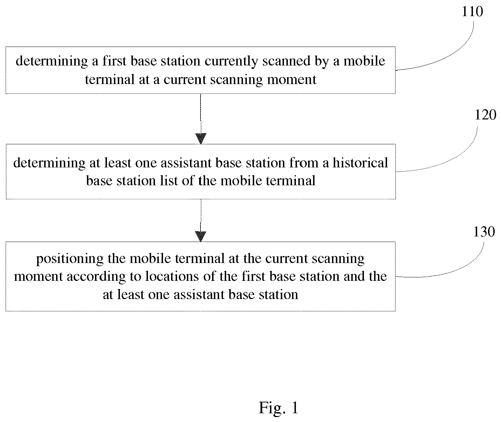

Fig. 1 is a flow chart of a base station positioning method according to a first embodiment of the present invention. The positioning method according to this embodiment may be executed by a base station positioning apparatus, which may be realized by hardware and/or software and is generally integrated in a client (for example, a navigation application or a positioning application, such as XX map or XX positioning) configured to provide a base station positioning service for being used in cooperation with a base station positioning server.

The positioning method according to this embodiment includes following steps.

In step 110, a first base station currently scanned by a mobile terminal at a current scanning moment is determined.

As described above (in the background), only a few special terminals can obtain signals from a plurality of surrounding base stations at the same time. However, a common terminal in the market can only obtain the signal from one base station, i.e., the signal from the base station which is currently accessed by the terminal (or, the signal from the base station that has the strongest sending signal power in an environment where the terminal is) at the same time.

In this embodiment, the currently scanned base station includes the base station which has the strongest sending signal power and is scanned (or, accessed) by the mobile terminal currently.

Generally, after the mobile terminal accesses one base station, the base station can be determined solely according to a base station identity code (BSIC) included in the signal sent by the base station.

In step 120, at least one assistant base station is determined from a historical base station list of the mobile terminal.

In this embodiment, base stations scanned by the mobile terminal before the current scanning moment (i.e., scanned by the mobile terminal historically) are stored in the historical base station list. The historical base station list may only store the base stations scanned by the mobile terminal historically, or may not only store the base stations scanned by the mobile terminal historically but also store scanning moments corresponding to the historically scanned base stations, which is not limited in this embodiment.

In the existing positioning method based on a single base station, the mobile terminal is positioned to the single base station which is scanned thereby, thus resulting in a poor positioning accuracy. In this embodiment, considering that although the mobile terminal can only scan one base station at the same time, the base stations scanned by the mobile terminal historically are stored in the historical base station list of the mobile terminal, if base stations each having a scanning moment in a predetermined time range with respect to the current scanning moment and having a position in a predetermined space range with respect to the currently scanned base station are chosen, it means that other base stations in the environment of the mobile terminal at the current scanning moment are obtained. If these base stations obtained are used as the assistant base stations for positioning the mobile terminal in combination with the currently scanned base station, the positioning accuracy can be increased greatly as compared with the positioning method based on single base station.

Correspondingly, in this embodiment, the at least one assistant base station includes the base station stored in the historical base station list, whose scanning moment is in the predetermined time range with respect to the current scanning moment, and which is in the predetermined space range with respect to the first base station.

In this embodiment, the currently scanned base station and the base stations stored in the historical base station list may be sent to the base station positioning server, such that the assistant base stations may be determined in the assistance of the base station positioning server. Alternatively, the assistant base stations may be determined by the client directly according to base station characteristics or storing rules of the base stations stored in the historical base station list, which is not limited in this embodiment.

In step 130, the mobile terminal at the current scanning moment is positioned according to locations of the first base station and the at least one assistant base station.

Generally, locations of respective base stations are stored in the base station positioning server. Thus, by sending identification information (typically, BSIC information) of the first base station and the at least one assistant base station to the base station positioning server, the client can obtain the locations of the first base station and the at least one assistant base station.

In this embodiment, positioning the mobile terminal at the current scanning moment according to the locations of the first base station and the at least one assistant base station includes following steps.

The mobile terminal at the current scanning moment is positioned according to a region surrounded by the locations of the first base station and the at least one assistant base station. For example, a geometric gravity center of the region surrounded is determined as the location of the mobile terminal at the current scanning moment.

Alternatively, the mobile terminal at the current scanning moment is positioned according to longitude and latitude coordinates of the locations of the first base station and the at least one assistant base station. For example, average values of respective longitude and latitude coordinates are determined directly as the location of the mobile terminal at the current scanning moment, or weighted average values of respective longitude and latitude coordinates are determined as the location of the mobile terminal at the current scanning moment, in which the weighted average values are obtained by adding a weight to the longitude and latitude corresponding to each of the locations of the first base station and the assistant base stations.

With the embodiment of the present invention, after the first base station currently scanned by the mobile terminal at the current scanning moment is obtained, instead of positioning the mobile terminal according to the first base station solely, the at least one assistant base station is determined according to the historical base station list of the mobile terminal, in which the scanning moment of each of the at least one assistant base station is in the predetermined time range with respect to the current scanning moment, and each of the at least one assistant base station is in the predetermined space range with respect to the first base station, and then the mobile terminal is positioned according to the locations of the first base station and the at least one assistant base station. With above technical means, when the mobile terminal is moving in the predetermined time range and in the predetermined space range, the mobile terminal can be positioned by using a plurality of surrounding base stations and the currently scanned base station, which increases the positioning basis and improves the positioning accuracy.

Base on the above embodiment, if there is no base station satisfying corresponding requirements in the historical base station list, the mobile terminal at the current scanning moment is positioned only according to the currently scanned base station.

Embodiment 2

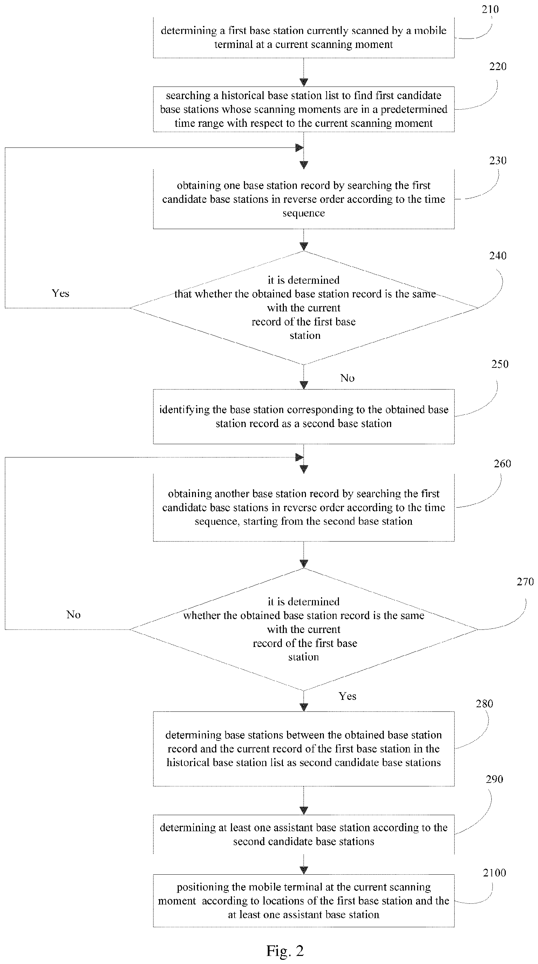

Fig. 2 is a flow chart of a base station positioning method according to a second embodiment of the present invention. This embodiment is an optimization based on the above embodiment. In this embodiment, base stations scanned by the mobile terminal historically and scanning moments of the historically scanned base stations are stored in the historical base station list.

Determining the at least one assistant base station from the historical base station list of the mobile terminal is optimized as follows.

The historical base station list is searched to find first candidate base stations whose scanning moments are in the predetermined time range with respect to the current scanning moment. At least one historical record of the first base station is obtained from the first candidate base stations, and base stations between the at least one historical record of the first base station and a current record of the first base station in the historical base station list are determined as second candidate base stations. The at least one assistant base station is determined according to the second candidate base stations.

Correspondingly, the method according to the present embodiment includes following steps.

In step 210, a first base station currently scanned by a mobile terminal at a current scanning moment is determined.

In step 220, a historical base station list is searched to find first candidate base stations whose scanning moments are in a predetermined time range with respect to the current scanning moment.

In this embodiment, base stations scanned by the mobile terminal historically and scanning moments of the historically scanned base stations are stored in the historical base station list. Typically, respective base stations are stored in the historical base station list in a following manner:

$$(t\_1, cl\_1)\text{->}(t\_2, cl\_2)\text{-> ...-> } (t\_i, cl\_i) \text{->...->}(t\_n, cl\_n),$$

in which, t_i represents the scanning moment, cl_i represents the base station scanned at the scanning moment t_i, and t_i < t_(i+1), i.e., the base stations scanned by the mobile terminal historically are stored in the historical base station list sequentially according to the scanning moments thereof.

Since the assistant base station should satisfy a requirement that the scanning moment of the assistant base station is in the predetermined time range with respect to the current scanning moment, in this embodiment, the historical base station list is searched to firstly find the first candidate base stations whose scanning moments are in the predetermined time range with respect to the current scanning moment.

Typically, assuming that the current scanning moment is denoted as T, then a time difference $\Delta t$ may be provided (the time difference $\Delta t$ may be preset according to actual conditions, for example, may be preset as 10 minutes, 20 minutes or 30 minutes), and thus the predetermined time range may be determined as T-$\Delta t$~T, such that the historical base station list can be searched to find the historically scanned base stations in the predetermined time range T-$\Delta t$~T as the first candidate base stations.

In step 230, one base station record is obtained from the first candidate base stations according to the scanning moment sequence.

For example, the current scanning moment T is 11:20, the time difference $\Delta t$ is 30 minutes, the corresponding predetermined time range is 10:50-11:20, and the first candidate base stations found from the historical base station list are arranged in a following manner according to the time sequence:

$$(10\text{:}55, \text{base station A})\text{->}(11\text{:}00, \text{base station B})\text{->}(11\text{:}05, \text{base station B})\text{->}(11\text{:}10, \text{base station}$$

$$\text{D})\text{->}(11\text{:}15, \text{base station A}).$$

One base station record is obtained by searching the first candidate base stations in a reverse sequence (in a direction towards (10:55, base station A)) from (11:15, base station A).

Since the assistant base station should satisfy another requirement that the assistant base station is in the predetermined space range with respect to the first base station, in this embodiment, one condition is considered, in which, the first candidate base stations (i.e., base stations scanned by the mobile terminal in the predetermined time range) includes at least one historical record of the first base station. That is, the first base station has appeared in the historical base station list ever, which means that the mobile terminal moves in a small space range. Thus, the at least one assistant base station (the base station adjacent to or near the first base station) may be determined according to base stations between the at least one historical record of the first base station and a current record of the first base station in the historical base station list.

In a preferred implementation of the embodiment, the at least one assistant base station is determined according to the base stations between the at least one historical record of the first base station obtained in reverse order according to the time sequence and the current record of the first base station in the historical base station list, in which there is at least one record of another base station different from the first base station between the above two records.

In step 240, it is determined that whether the obtained base station record is the same with the current record of the first base station, if yes, step 230 is executed; if no, step 250 is executed.

In this embodiment, another condition should also be considered, in which, a user stays at the first base station or moves slowly near the first base station. In this case, in a period of time before the current scanning moment, each base station record stored in the historical base station list is the same with the current record of the first base station. If the at least one assistant base station is directly determined according to the base stations between the at least one historical record of the first base station obtained in reverse order according to the time sequence and the current record of the first base station in the historical base station list, the at least one assistant base station will not include any other base station adjacent to or near the first base station. Thus, when the at least one assistant base station is determined, another requirement should be satisfied, i.e., there is at least one record of another base station different from the first base station between the at least one historical record of the first base station in the historical base station list and the current record of the first base station.

In step 250, a base station corresponding to the obtained base station record is identified as a second base station, and step 260 is executed.

In step 260, another base station record is obtained by searching the first candidate base station in reverse order according to the time sequence, starting from the second base station, and step 270 is executed.

In step 270, it is determined whether the other obtained base station record is the same with the current record of the first base station, if yes, step 280 is executed; if no, step 260 is executed.

In step 280, base stations between the other obtained base station record and the current record of the first base station in the historical base station list are determined as second candidate base stations.

In step 290, at least one assistant base station is determined according to the second candidate base stations.

In this embodiment, the second candidate base stations may be determined as assistant base stations directly, or a certain data processing may be performed on the second candidate base stations for determining the assistant base stations, which is not limited in this embodiment.

In an example, considering that there may be a certain number of repeated base stations in the second candidate base stations (for example, the user stays at or move slowly near a certain base station), the repeated base stations may be removed from the second candidate base stations so as to generate the at least one assistant base station.

In another example, considering that there may be one or more base stations same with the first base station in the second candidate base stations (for example, at a scanning moment before and adjacent to the current scanning moment, the base station stored in the historical base station list is the same with the first base station), the base station same with the first base station may be excluded from the second candidate base stations so as to generate the at least one assistant base station.

In a preferred implementation of the embodiment, in order to further improve the positioning accuracy, determining the at least one assistant base station according to the second candidate base stations may include: removing the repeated base stations from the second candidate base stations and excluding the first base station, so as to determine the at least one assistant base station.

In step 2100, the mobile terminal at the current scanning moment is positioned according to locations of the first base station and the at least one assistant base station.

In a specific example, the current scanning moment is 11:20, the first base station is base station A, the predetermined time range is 10:50-11:20, and the first candidate base stations are arranged in the historical base station list according to the time sequence in the following manner:

(10:55, base station A)->(11:00, base station B)->(11:05, base station B)->(11:10, base station D)->(11:15, base station A).

A process of determining the at least one assistant base station includes following steps:

(1) one base station record (i.e., base station A corresponding to (11:15, base station A)) is obtained by searching the first candidate base stations in reverse order, the obtained base station record is the same with the current record of the currently scanned base station (i.e., base station A), then another base station record (i.e., base station D corresponding to (11:10, base station D)) is obtained by further searching the first candidate base stations in reverse order, and since this base station record is different from the current record of the currently scanned base station, the base station D is determined as the second base station;

(2) one base station record (i.e., base station B corresponding to (11:05, base station B)) is obtained by searching the first candidate base stations in reverse order according to the time sequence, starting from the second base station (11:10, base station D) (not including the second base station), the obtained base station record is different from the current record of the first base station, then a next base station record (i.e., base station A corresponding to (10:55, base station A)) is obtained by further searching the first candidate base stations in reverse order, and once the base station record is the same with the current record of the currently scanned base station, the searching is stopped;

(3) the base stations between (10:55, base station A) and the current record of the first base station (i.e., (11:20, base station A)) are determined as the second candidate base stations, i.e., (11:00, base station B)->(11:05, base station B)->(11:10, base station D)->(11:15, base station A);

(4) the repeated base stations are removed from the second candidate base stations and the first base station is excluded from the second candidate base stations, so as to determine the at least one assistant base station, that is, the assistant base stations finally determined include: base station B and base station D.

With the positioning method according to this embodiment, firstly, the historical base station list is searched to find the first candidate base stations whose scanning moments are in the predetermined time range with respect to the current scanning moment; then, at least one historical record of the currently scanned base station is obtained from first candidate base stations, and the base stations between the at least one historical record of the currently scanned base station and the current record of the currently scanned base station in the historical base station list are determined as second candidate base stations, in which at least one record of another base station exists between the at least one historical record of the currently scanned base station and the current record of the currently scanned base station; finally, the assistant base stations are determined according to the second candidate base stations. Thus, the assistant base stations can be determined only according to correlation characteristics of the base stations stored in the historical base station list of the mobile terminal, without uploading the historical base station list to the base station positioning server, which improves the positioning accuracy as compared with the positioning method based on single base station and reduces data transmission flow.

Based on above embodiments, determining the assistant base stations according to the second candidate base stations may include following steps:

removing repeated base stations from the second candidate base stations and excluding the first base station, so as to generate target base stations;
determining d number of the target base stations; and
determining the target base stations as the assistant base stations if the number of the target base stations is less than a predetermined threshold.

This configuration is based on such an extreme condition, in which the user makes a long-distance reciprocating motion in a short time (such as going to supermarket for shopping by car and/or bus and returning by car and/or bus). In this case, the second candidate base stations obtained with the positioning method according to this embodiment must include one or more base stations far away from the currently scanned base station, and if these base stations far away from the currently scanned base station are used as the assistant base stations, the positioning accuracy will be decreased. In order to avoid the above problem, in a preferred implementation of the embodiment, the repeated base stations are removed firstly from the second candidate base stations and the first base station is excluded, so as to generate the target base stations, and then the number of the target base stations is determined. If the number of the target base stations is less than the predetermined threshold (such as 3, 4 or 5), the target base stations are determined as the assistant base stations; if the number of the target base stations is larger than the predetermined threshold, it is determined that the target base stations include the base stations far away from the currently scanned base station, and thus the mobile terminal is positioned only according to the currently scanned base station. In this way, the positioning method may be applied widely and a positioning error is reduced.

Embodiment 3

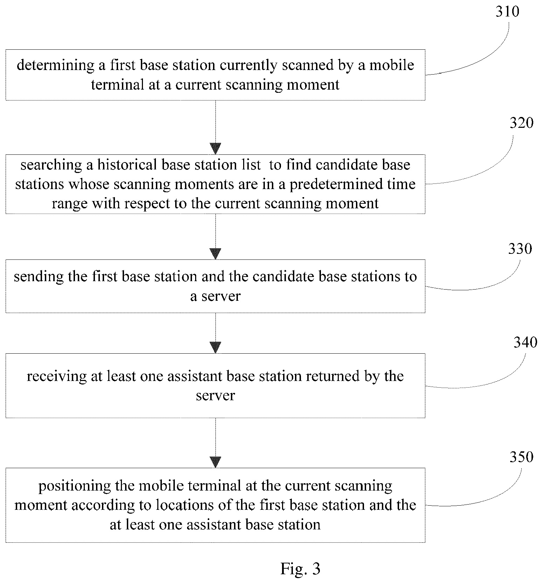

Fig. 3 is a flow chart of a base station positioning method according to a third embodiment of the present invention. This embodiment is an optimization based on the above embodiments. In this embodiment, base stations scanned by the mobile terminal historically and scanning moments of the historically scanned base stations are stored in the historical base station list.

Determining at least one assistant base station from the historical base station list of the mobile terminal is optimized as follows.

The historical base station list is searched to find candidate base stations whose scanning moments are in the predetermined time range with respect to the current scanning moment. The currently scanned base station and the candidate base stations are sent to a server, such that the server determines the at least one assistant base station according to locations of the currently scanned base station and the candidate base stations. The at least one assistant base station returned by the server is received.

Correspondingly, the positioning method according to this embodiment includes following steps.

In step 310, a first base station currently scanned by a mobile terminal at a current scanning moment is determined.

In step 320, a historical base station list is searched to find candidate base stations whose scanning moments are in a predetermined time range with respect to the current scanning moment.

In step 330, the first base station and the candidate base stations are sent to a server.

In this embodiment, the client sends the currently scanned base station and the candidate base stations to the base station positioning server, such that the server determines one or more base stations (which are in the predetermined space range (such as 10 meters, 20 meters or 30 meters) with respect to the currently scanned base station) in the base stations as the at least one assistant base station, according to locations of respective base stations pre-stored therein.

In step 340, at least one assistant base station returned by the server is received.

In step 350, the mobile terminal at the current scanning moment is positioned according to locations of the first base station and the at least one assistant base station.

With the positioning method according to this embodiment, the currently scanned base station and the base stations whose scanning moments are in the predetermined time range with respect to the current scanning moment are sent to the server, and the at least one assistant base station is received from the server, thus improving the positioning accuracy as compared with the positioning method based on single base station, while reducing a data processing pressure of the mobile terminal.

Embodiment 4

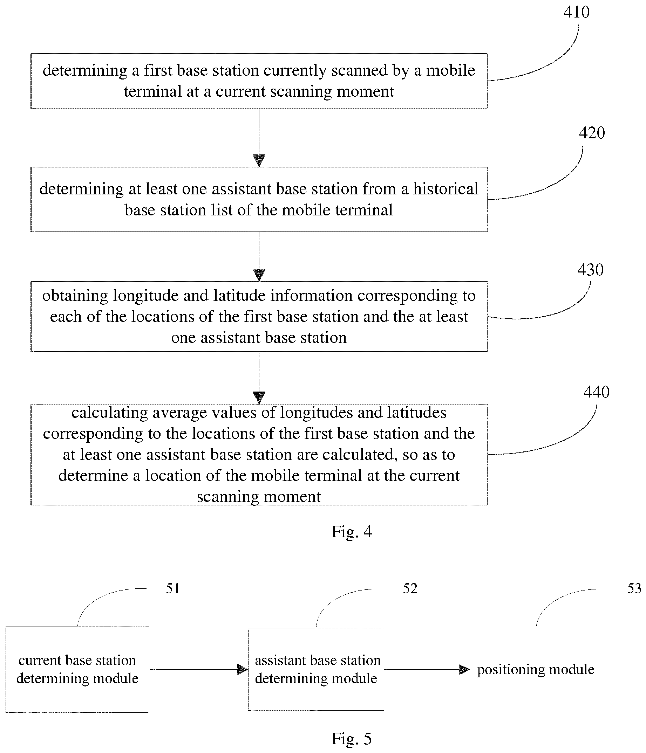

Fig. 4 is a flow chart of a base station positioning method according to a fourth embodiment of the present invention. This embodiment is an optimization based on the above embodiments. In this embodiment, positioning the mobile terminal at the current scanning moment according to locations of the currently scanned base station and the at least one assistant base station is optimized as follows.

A longitude and a latitude corresponding to each of the locations of the currently scanned base station and the at least one assistant base station are obtained. Average values of longitudes and latitudes corresponding to the locations of the currently scanned base station and the at least one assistant base station are calculated, and used a location of the mobile terminal at the current scanning moment.

Correspondingly, the positioning method according to this embodiment includes following steps.

In step 410, a first base station currently scanned by a mobile terminal at a current scanning moment is determined.

In step 420, at least one assistant base station is determined from a historical base station list of the mobile terminal.

In step 430, longitude and latitude information corresponding to each of the locations of the first base station and the at least one assistant base station is obtained.

In this embodiment, the client sends identification information of the first base station and the at least one assistant base station to the base station positioning server, so as to obtain the longitude and latitude information corresponding to each of the locations of the first base station and the at least one assistant base station.

For example, the longitude and latitude information corresponding to each of the locations of the first base station and the at least one assistant base station, which is obtained by the client via the base station positioning server, may be respectively denoted as: $(x\_1, y\_1), (x\_2, y\_2), \cdots, (x\_i, y\_i), \cdots, (x\_k, y\_k)$, in which, $x\_i$ represents a longitude corresponding to the location of the base station, $y\_i$ represents a latitude corresponding to the location of the base station, and $k$ represents a total number of the first base station and the at least one assistant base station.

In step 440, average values of longitudes and latitudes corresponding to the locations of the first base station and the at least one assistant base station are calculated, so as to determine a location of the mobile terminal at the current scanning moment.

Following the above example, in this embodiment, longitude and latitude information $(x, y)$ of the mobile terminal at the current scanning moment may be calculated by a following formula:

$$\begin{cases} x = \left(x\_1 + x\_2 + \ldots + x\_k\right)/k \\ y = \left(y\_1 + y\_2 + \ldots + y\_k\right)/k \end{cases}.$$

With the positioning method according to this embodiment, the longitude and latitude information corresponding to each of the locations of the currently scanned base station and the at least one assistant base station is obtained, and the average values of longitudes and latitudes corresponding to the locations of the currently scanned base station and the at least one assistant base station are calculated, so as to determine the location of the mobile terminal at the current scanning moment. In this way, the mobile terminal can be positioned by using a plurality of surrounding base stations together with the currently scanned base station, which increases the positioning basis and improves the positioning accuracy as compared with the positioning method based on single base station.

Based on the above embodiments, before calculating the average values of longitudes and latitudes corresponding to the locations of the currently scanned base station and the at least one assistant base station to determine the location of the mobile terminal at the current scanning moment, the positioning method preferably further includes: adding a weight value to the longitude and latitude corresponding to each of the locations of the currently scanned base station and the at least one assistant base station according to the current scanning moment and scanning moment corresponding to the at least one assistant base station.

For example, a following weight value adding strategy may be set, such that the closer the scanning moment of the base station is to the current scanning moment, the larger the weight value added to the longitude and latitude corresponding to the location of the base station is. Such a configuration is based on a fact that, the closer the scanning moment is to the current scanning moment, the closer the base station scanned at the scanning moment is to the currently scanned base station in theory, and thus a larger weight value should be added to the longitude and latitude corresponding to the location of the base station when calculating the location of the mobile terminal. This configuration has an advantage of further improving the positioning accuracy of the base station positioning method.

Embodiment 5

Fig. 5 is a block diagram of a base station positioning apparatus according to a fifth embodiment of the present invention. As shown in Fig. 5, the positioning apparatus includes a current base station determining module 51, an assistant base station determining module 52 and a positioning module 53.

The current base station determining module 51 is configured to determine a first base station currently scanned by a mobile terminal at a current scanning moment.

The assistant base station determining module 52 is configured to determine at least one assistant base station from a historical base station list of the mobile terminal, in which a scanning moment of each of the at least one assistant base station is in a predetermined time range with respect to the current scanning moment, and each of the at least one assistant base station is in a predetermined space range with respect to the first base station.

The positioning module 53 is configured to position the mobile terminal at the current scanning moment according to locations of the first base station and the at least one assistant base station.

With the positioning apparatus according to this embodiment, after the first base station currently scanned by the mobile terminal at the current scanning moment is obtained, instead of positioning the mobile terminal according to the first base station solely, the at least one assistant base station is determined according to the historical base station list of the mobile terminal, in which the scanning moment of each of the at least one assistant base station is in the predetermined time range with respect to the current scanning moment, and each of the at least one assistant base station is in the predetermined space range with respect to the first base station, and then the mobile terminal is positioned according to the locations of the first base station and the at least one assistant base station. With above technical means, when the mobile terminal is moving in the predetermined time range and in the predetermined space range, the mobile terminal can be positioned by using a plurality of surrounding base stations and the currently scanned base station, which increases the positioning basis and improves the positioning accuracy as compared with the positioning method based on single base station.

Based on the above embodiments, base stations scanned by the mobile terminal historically and scanning moments of the historically scanned base stations are stored in the historical base station list.

The assistant base station determining module includes a first candidate base station determining unit, a second candidate base station determining unit and an assistant base station determining unit.

The first candidate base station searching unit is configured to search the historical base station list to find first candidate base stations whose scanning moments are in the predetermined time range with respect to the current scanning moment.

The second candidate base station determining unit is configured to obtain at least one historical record of the first base station from the first candidate base stations, and to determine base stations between the at least one historical record of the first base station and a current record of the first base station in the historical base station list as second candidate base stations, in which at least one record of a base station different from the first base station exists between the at least one historical record of the first base station and the current record of the first base station.

The assistant base station determining unit is configured to determine the at least one assistant base station according to the second candidate base stations.

Based on the above embodiments, the assistant base station determining unit may be configured to remove repeated base stations from the second candidate base stations and exclude the first base station, so as to determine the at least one assistant base station.

Based on the above embodiments, the assistant base station determining unit may be configured to: remove repeated base stations from the second candidate base stations and exclude the first base station, so as to generate target base stations; determine a number of the target base stations; and determine the target base stations as the assistant base stations if the number of the target base stations is less than a predetermined threshold.

Based on the above embodiments, base stations scanned by the mobile terminal historically and scanning moments of the historically scanned base stations are stored in the historical base station list.

The assistant base station determining module is configured to: search the historical base station list to find candidate base stations whose scanning moments are in the predetermined time range with respect to the current scanning moment; send the first base station and the candidate base stations to a server, such that the server determines the at least one assistant base station according to locations of the first base station and the candidate base stations; and receive the at least one assistant base station returned by the server.

Based on the above embodiments, the positioning module may specifically include an obtaining unit and a calculating unit.

The obtaining unit is configured to obtain a longitude and a latitude corresponding to each of the locations of the first base station and the at least one assistant base station.

The calculating unit is configured to calculate average values of longitudes and latitudes corresponding to the locations of the first base station and the at least one assistant base station, so as to determine a location of the mobile terminal at the current scanning moment.

Based on the above embodiments, the positioning module may further include an adding unit.

The adding unit is configured to add a weight value to the longitude and latitude corresponding to each of the locations of the first base station and the at least one assistant base station according to the current scanning moment and scanning moment corresponding to the at least one assistant base station, before calculating the average values.

The positioning apparatus according to the embodiments of the present invention may be used to execute the positioning method provided by any embodiment of the present invention, and provided with corresponding modules, thus realizing same beneficial effects.

Apparently, those skilled in the related art should understand that above respective modules and steps in the present invention may be executed by the client described above. Optionally, the embodiments of the present invention may be implemented by computer-executable programs, such that these programs may be stored in a memory and executed by a processor. These programs may be stored in computer-readable memory mediums, such as read-only memories, magnetic disks or CD, etc. Or, these modules may be made as respective integrated circuit modules respectively, or some of modules or steps may be integrated into a single integrated circuit module. Thus, the present invention is not limited to combinations of any special hardware and software. The scope of the invention is defined by the appended claims.

### Claims

1. A base station positioning method, comprising:

   determining a first base station currently detected by a mobile terminal at a current detecting moment;
   determining at least one additional base station from a historical base station list of the mobile terminal, wherein a detecting moment of each of the at least one additional base station is in a predetermined time range with respect to the current detecting moment, and each of the at least one additional base station is in a predetermined space range with respect to the first base station, and wherein the historical base station list comprises a plurality of base stations detected by the mobile terminal at a time prior to the current detecting moment, and detecting moments of the plurality of base stations; and
   positioning the mobile terminal at the current detecting moment according to locations of the first base station and the at least one additional base station.

2. The method according to claim 1, wherein
   determining at least one additional base station from a historical base station list of the mobile terminal comprises:

   searching the historical base station list to find first candidate base stations whose detecting moments are in the predetermined time range with respect to the current scanning moment;
   obtaining at least one historical record of the first base station from the first candidate base stations, and determining base stations between the at least one historical record of the first base station and a current record of the first base station in the historical base station list as second candidate base stations, in which at least one record of a base station different from the first base station exists between the at least one historical record of the first base station and the current record of the first base station;
determining the at least one additional base station according to the second candidate base stations.

3. The method according to claim 2, wherein determining the at least one additional base station according to the second candidate base stations comprises:
removing repeated base stations from the second candidate base stations and excluding the first base station, so as to determine the at least one additional base station.

4. The method according to claim 2, wherein determining the at least one additional base station according to the second candidate base stations comprises:

removing repeated base stations from the second candidate base stations and excluding the first base station, so as to generate target base stations;
determining a number of the target base stations;
determining the target base stations as the at least one additional base station if the number of the target base stations is less than a predetermined threshold.

5. The method according to claim 1, wherein
determining at least one additional base station from a historical base station list of the mobile terminal comprises:

searching the historical base station list to find candidate base stations whose detecting moments are in the predetermined time range with respect to the current detecting moment;
sending the first base station and the candidate base stations to a server, such that the server determines the at least one additional base station in the predetermined space range with respect to the first base station, according to locations of the first base station and the candidate base stations; and
receiving the at least one additional base station returned by the server.

6. The method according to any one of claims 1-5, wherein positioning the mobile terminal according to locations of the first base station and the at least one additional base station comprises:

obtaining a longitude and a latitude corresponding to each of the locations of the first base station and the at least one additional base station; and
calculating average values of longitudes and latitudes corresponding to the locations of the first base station and the at least one additional base station, so as to determine a location of the mobile terminal at the current detecting moment.

7. The method according to claim 6, further comprising:
adding a weight value to the longitude and latitude corresponding to each of the locations of the first base station and the at least one additional base station according to the current detecting moment and detecting moment corresponding to the at least one additional base station, before calculating the average values.

8. A base station positioning apparatus, comprising:

a current base station determining module (51), configured to determine a first base station currently detected by a mobile terminal at a current detecting moment;
an additional base station determining module (52), configured to determine at least one additional base station from a historical base station list of the mobile terminal, wherein a detecting moment of each of the at least one additional base station is in a predetermined time range with respect to the current detecting moment, and each of the at least one additional base station is in a predetermined space range with respect to the first base station, and wherein the historical base station list comprises a plurality of base stations detected by the mobile terminal at a time prior to the current detecting moment, and detecting moments of the plurality of based stations; and
a positioning module (53), configured to position the mobile terminal at the current detecting moment according to locations of the first base station and the at least one additional base station.

9. The apparatus according to claim 8, wherein
the additional base station determining module (52) comprises:

a first candidate base station determining unit, configured to search the historical base station list to find first candidate base stations whose detecting moments are in the predetermined time range with respect to the current detecting moment;

a second candidate base station determining unit, configured to obtain at least one historical record of the first base station from the first candidate base stations, and to determine base stations between the at least one historical record of the first base station and a current record of the first base station in the historical base station list as second candidate base stations, in which at least one record of a base station different from the first base station exists between the at least one historical record of the first base station and the current record of the first base station; and

an additional base station determining unit, configured to determine the at least one additional base station according to the second candidate base stations.

10. The apparatus according to claim 9, wherein the additional base station determining unit is configured to:
remove repeated base stations from the second candidate base stations and exclude the first base station, so as to determine the at least one additional base station.

11. The apparatus according to claim 9, wherein the additional base station determining unit is configured to:

remove repeated base stations from the second candidate base stations and exclude the first base station, so as to generate target base stations;
determine a number of the target base stations;
determine the target base stations as the at least one additional base station if the number of the target base stations is less than a predetermined threshold.

12. The apparatus according to claim 8, wherein
the additional base station determining module (52) is configured to:

search the historical base station list to find candidate base stations whose detecting moments are in the predetermined time range with respect to the current detecting moment;
send the first base station and the candidate base stations to a server, such that the server determines the at least one additional base station in the predetermined space range with respect to the first base station, according to locations of the first base station and the candidate base stations; and
receive the at least one additional base station returned by the server.

13. The apparatus according to any one of claims 8-12, wherein the positioning module (53) comprises:

an obtaining unit, configured to obtain a longitude and a latitude corresponding to each of the locations of the first base station and the at least one additional base station; and
a calculating unit, configured to calculate average values of longitudes and latitudes corresponding to the locations of the first base station and the at least one additional base station, so as to determine a location of the mobile terminal at the current detecting moment.

14. The apparatus according to claim 13, wherein the positioning module (53) further comprises:
an adding unit, configured to add a weight value to the longitude and latitude corresponding to each of the locations of the first base station and the at least one additional base station according to the current detecting moment and detecting moment corresponding to the at least one additional base station, before calculating the average values.

15. A program product having stored therein instructions that, when executed by one or more processors of an apparatus, causes the apparatus to perform the base station positioning method according to any one of claims 1-7.

**Patentansprüche**

1. Basisstationspositionierverfahren, umfassend:

Bestimmen einer ersten Basisstation, die aktuell von einem mobilen Endgerät zu einem aktuellen Erfassungsmoment erfasst wird;
Bestimmen wenigstens einer zusätzlichen Basisstation aus einer historischen Basisstationsliste des mobilen Endgeräts, wobei ein Erfassungsmoment jeder wenigstens einen zusätzlichen Basisstation in einem vorbestimmten Zeitbereich mit Bezug auf den aktuellen Erfassungsmoment liegt und wobei jede wenigstens eine zusätzliche Basisstation in einem vorbestimmten Raumbereich mit Bezug auf die erste Basisstation liegt und wobei die historische Basisstationsliste eine Vielzahl von Basisstationen umfasst, die von dem mobilen Endgerät zu einer Zeit vor dem aktuellen Erfassungsmoment erfasst wurden, sowie Erfassungsmomente der Vielzahl von Basisstationen; und

Positionieren des mobilen Endgeräts zu dem aktuellen Erfassungsmoment gemäß den Orten der ersten Basisstation und der wenigstens einen zusätzlichen Basisstation.

2. Verfahren nach Anspruch 1, wobei
das Bestimmen wenigstens einer zusätzlichen Basisstation aus einer historischen Basisstationsliste des mobilen Endgeräts umfasst:

Durchsuchen der historischen Basisstationsliste, um erste Kandidatenbasisstationen zu finden, deren Erfassungsmomente in dem vorbestimmten Zeitbereich mit Bezug auf den aktuellen Abtastmoment liegen;
Erhalten wenigstens einer historischen Aufzeichnung der ersten Basisstation von den ersten Kandidatenbasisstationen und Bestimmen von Basisstationen zwischen der wenigstens einen historischen Aufzeichnung der ersten Basisstation und einer aktuellen Aufzeichnung der ersten Basisstation in der historischen Basisstationsliste als zweite Kandidatenbasisstationen, wobei wenigstens eine Aufzeichnung einer Basisstation, die sich von der ersten Basisstation unterscheidet, zwischen der wenigstens einen historischen Aufzeichnung der ersten Basisstation und der aktuellen Aufzeichnung der ersten Basisstation existiert;
Bestimmen der wenigstens einen zusätzlichen Basisstation gemäß den zweiten Kandidatenbasisstationen.

3. Verfahren nach Anspruch 2, wobei das Bestimmen der wenigstens einen zusätzlichen Basisstation gemäß den zweiten Kandidatenbasisstationen umfasst:
Entfernen wiederholter Basisstationen von den zweiten Basisstationen und Ausschließen der ersten Basisstation, um so die wenigstens eine zusätzliche Basisstation zu bestimmen.

4. Verfahren nach Anspruch 2, wobei das Bestimmen der wenigstens einen zusätzlichen Basisstation gemäß den zweiten Kandidatenbasisstationen umfasst:

Entfernen wiederholter Basisstationen von den zweiten Kandidatenbasisstationen und Ausschließen der ersten Basisstation, um so Zielbasisstationen zu erzeugen;
Bestimmen einer Anzahl der Zielbasisstationen;
Bestimmen der Zielbasisstationen als die wenigstens eine zusätzliche Basisstation, wenn die Anzahl der Zielbasisstationen kleiner als eine vorbestimmte Schwelle ist.

5. Verfahren nach Anspruch 1, wobei
das Bestimmen der wenigstens einen zusätzliche Basisstation von einer historischen Basisstationsliste des mobilen Endgeräts umfasst:

Durchsuchen der historischen Basisstationsliste, um Kandidatenbasisstationen zu finden, deren Erfassungsmomente in dem vorbestimmten Zeitbereich mit Bezug auf den aktuellen Erfassungsmoment liegen;
Senden der ersten Basisstation und der Kandidatenbasisstationen an einen Server, so dass der Server die wenigstens eine zusätzliche Basisstation in dem vorbestimmten Raumbereich mit Bezug auf die erste Basisstation bestimmt, gemäß Orten der ersten Basisstation und der Kandidatenbasisstationen; und
Empfangen der wenigstens einen zusätzlichen Basisstation, die von dem Server zurückgegeben wird.

6. Verfahren nach einem der Ansprüche 1-5, wobei das Positionieren des mobilen Endgeräts gemäß Orten der ersten Basisstation und der wenigstens einen zusätzlichen Basisstation umfasst:

Erhalten einer Länge und einer Breite entsprechend jedem der Orte der ersten Basisstation und der wenigstens einen zusätzlichen Basisstation; und
Berechnen von Durchschnittswerten von Längen und Breiten entsprechend den Orten der ersten Basisstation und der wenigstens einen zusätzlichen Basisstation, um so einen Ort des mobilen Endgeräts zu dem aktuellen Erfassungsmoment zu bestimmen.

7. Verfahren nach Anspruch 6, weiterhin umfassend:

Zufügen eines Gewichtungswertes zu der Länge und der Breite entsprechend jedem der Orte von der ersten Basisstation und der wenigstens einen zusätzlichen Basisstation gemäß dem aktuellen Erfassungsmoment und dem Erfassungsmoment, der der wenigstens einen zusätzlichen Basisstation entspricht, vor dem Berechnen der Durchschnittswerte.

8.  Basisstationspositioniervorrichtung, umfassend:

    ein Bestimmungsmodul (51) für eine aktuelle Basisstation, das konfiguriert ist, um eine erste Basisstation zu bestimmen, die aktuell von einem mobilen Endgerät zu einem aktuellen Erfassungsmoment erfasst wird;
    ein Bestimmungsmodul (52) für eine zusätzliche Basisstation, das konfiguriert ist, um wenigstens eine zusätzliche Basisstation aus einer historischen Basisstationsliste des mobilen Endgeräts zu bestimmen, wobei ein Erfassungsmoment jeder wenigstens einen zusätzlichen Basisstation in einem vorbestimmten Zeitbereich mit Bezug auf den aktuellen Erfassungsmoment liegt und wobei jede wenigstens eine zusätzliche Basisstation in einem vorbestimmten Raumbereich mit Bezug auf die erste Basisstation liegt und wobei die historische Basisstationsliste eine Vielzahl von Basisstationen umfasst, die von dem mobilen Endgerät zu einer Zeit vor dem aktuellen Erfassungsmoment erfasst wurden, sowie Erfassungsmomente der Vielzahl von Basisstationen; und
    ein Positionierungsmodul (53), das konfiguriert ist, um das mobile Endgerät zu dem aktuellen Erfassungsmoment gemäß Orten der ersten Basisstation und der wenigstens einen zusätzlichen Basisstation zu positionieren.

9.  Vorrichtung nach Anspruch 8, wobei
    das Bestimmungsmodul (52) für die zusätzliche Basisstation umfasst:

    eine Bestimmungseinheit für eine erste Kandidatenbasisstation, die konfiguriert ist, um die historische Basisstationsliste zu durchsuchen, um erste Kandidatenbasisstationen zu finden, deren Erfassungsmomente in einem vorbestimmten Zeitbereich mit Bezug auf den aktuellen Erfassungsmoment liegen;
    eine Bestimmungseinheit für eine zweite Kandidatenbasisstation, die konfiguriert ist, um wenigstens eine historische Aufzeichnung der ersten Basisstation von den ersten Kandidatenbasisstationen zu erhalten, und um Basisstationen zwischen der wenigstens einen historischen Aufzeichnung der ersten Basisstation und einer aktuellen Aufzeichnung der ersten Basisstation in der historischen Basisstationsliste als zweite Kandidatenbasisstationen zu bestimmen, wobei wenigstens eine Aufzeichnung einer Basisstation zwischen der wenigstens einen historischen Aufzeichnung der ersten Basisstation und der aktuellen Aufzeichnung der ersten Basisstation existiert, die sich von der ersten Basisstation unterscheidet; und
    eine Bestimmungseinheit für eine zusätzliche Basisstation, die konfiguriert ist, um die wenigstens eine zusätzliche Basisstation gemäß den zweiten Kandidatenbasisstationen zu bestimmen.

10. Vorrichtung nach Anspruch 9, wobei die Bestimmungseinheit für die zusätzliche Basisstation konfiguriert ist zum:
    Entfernen wiederholter Basisstationen von den zweiten Kandidatenbasisstationen und Ausschließen der ersten Basisstation, um so die wenigstens eine zusätzliche Basisstation zu bestimmen.

11. Vorrichtung nach Anspruch 9, wobei die Bestimmungseinheit für die zusätzliche Basisstation konfiguriert ist zum:

    Entfernen wiederholter Basisstationen von den zweiten Kandidatenbasisstationen und Ausschließen der ersten Basisstation, um so Zielbasisstationen zu erzeugen;
    Bestimmen einer Anzahl der Zielbasisstationen;
    Bestimmen der Zielbasisstationen als die wenigstens eine zusätzliche Basisstation, wenn die Anzahl der Zielbasisstationen kleiner als eine vorbestimmte Schwelle ist.

12. Vorrichtung nach Anspruch 8, wobei
    das Bestimmungsmodul (52) der zusätzlichen Basisstation konfiguriert ist zum:

    Durchsuchen der historischen Basisstationsliste, um Kandidatenbasisstationen zu finden, deren Erfassungsmomente in dem vorbestimmten Zeitbereich mit Bezug auf den aktuellen Erfassungsmoment liegen;
    Senden der ersten Basisstation und der Kandidatenbasisstationen an einen Server, so dass der Server die wenigstens eine zusätzliche Basisstation in dem vorbestimmten Raumbereich mit Bezug auf die erste Basisstation bestimmt, gemäß Orten der ersten Basisstation und der Kandidatenbasisstationen; und
    Empfangen der wenigstens einen zusätzlichen Basisstation, die von dem Server zurückgegeben wird.

13. Vorrichtung nach einem der Ansprüche 8-12, wobei das Positionierungsmodul (53) umfasst:

eine Erhalteinheit, die konfiguriert ist, um eine Länge und eine Breite zu erhalten, die jedem der Orte der ersten Basisstation und der wenigstens einen zusätzlichen Basisstation entsprechen; und
eine Recheneinheit, die konfiguriert ist, um Durchschnittswerte von Längen und Breiten zu berechnen, die den Orten der ersten Basisstation und der wenigstens einen zusätzlichen Basisstation entsprechen, um so einen Ort des mobilen Endgeräts zu dem aktuellen Erfassungsmoment zu bestimmen.

14. Vorrichtung nach Anspruch 13, wobei das Positionierungsmodul (53) weiterhin umfasst:
eine Zufügeeinheit, die konfiguriert ist, um einen Gewichtungswert zu der Länge und der Breite hinzuzufügen, die jedem der Orte der ersten Basisstation und der wenigstens einen zusätzlichen Basisstation entsprechen, gemäß dem aktuellen Erfassungsmoment und einem Erfassungsmoment, der der wenigstens einen zusätzlichen Basisstation entspricht, bevor die Durchschnittswerte berechnet werden.

15. Programmprodukt, in dem Anweisungen gespeichert sind, die, wenn sie durch einen oder mehrere Prozessoren einer Vorrichtung ausgeführt werden, die Vorrichtung veranlassen, das Basisstationspositionierverfahren gemäß einem der Ansprüche 1-7 auszuführen.


**Revendications**

1. Procédé de positionnement de station de base, comprenant :

   la détermination d'une première station de base actuellement détectée par un terminal mobile à un instant de détection actuel ;
   la détermination d'au moins une station de base supplémentaire à partir d'une liste de stations de base d'historique du terminal mobile, dans lequel un instant de détection de chacune de ladite au moins une station de base supplémentaire est dans une plage de temps prédéterminée par rapport à l'instant de détection actuel, et chacune de ladite au moins une station de base supplémentaire est dans une plage spatiale prédéterminée par rapport à la première station de base, et dans lequel la liste de stations de base d'historique comprend une pluralité de stations de base détectées par le terminal mobile à un instant avant l'instant de détection actuel, et les instants de détection de la pluralité de stations de base ; et
   le positionnement du terminal mobile à l'instant de détection actuel conformément aux emplacements de la première station de base et de ladite au moins une station de base supplémentaire.

2. Procédé selon la revendication 1, dans lequel
la détermination d'au moins une station de base supplémentaire à partir d'une liste de stations de base d'historique du terminal mobile comprend :

   l'exécution d'une recherche dans la liste de stations de base d'historique pour trouver des premières stations de base candidates dont les instants de détection sont dans la plage de temps prédéterminée par rapport à l'instant de balayage actuel ;
   l'obtention d'au moins un enregistrement d'historique de la première station de base parmi les premières stations de base candidates, et la détermination des stations de base entre ledit au moins un enregistrement d'historique de la première station de base et un enregistrement actuel de la première station de base dans la liste de stations de base d'historique en tant que deuxièmes stations de base candidates, dans lequel au moins un enregistrement d'une station de base différente de la première station de base existe entre ledit au moins un enregistrement d'historique de la première station de base et l'enregistrement actuel de la première station de base ;
   la détermination de ladite au moins une station de base supplémentaire conformément aux deuxièmes stations de base candidates.

3. Procédé selon la revendication 2, dans lequel la détermination de ladite au moins une station de base supplémentaire conformément aux deuxièmes stations de base candidates comprend :
le retrait des stations de base répétées des deuxièmes stations de base candidates et l'exclusion de la première station de base, de manière à déterminer ladite au moins une station de base supplémentaire.

4. Procédé selon la revendication 2, dans lequel la détermination de ladite au moins une station de base supplémentaire conformément aux deuxièmes stations de base candidates comprend :

le retrait des stations de base répétées des deuxièmes stations de base candidates et l'exclusion de la première station de base, de manière à générer des stations de base cibles ;
la détermination d'un nombre des stations de base cibles ;
la détermination des stations de base cibles en tant que dite au moins une station de base supplémentaire si le nombre des stations de base cibles est inférieur à un seuil prédéterminé.

5. Procédé selon la revendication 1, dans lequel
la détermination d'au moins une station de base supplémentaire à partir d'une liste de stations de base d'historique du terminal mobile comprend :

l'exécution d'une recherche dans la liste de stations de base d'historique pour trouver des stations de base candidates dont les instants de détection sont dans la plage de temps prédéterminée par rapport à l'instant de détection actuel ;
l'envoi de la première station de base et des stations de base candidates à un serveur, de sorte que le serveur détermine ladite au moins une station de base supplémentaire dans la plage spatiale prédéterminée par rapport à la première station de base, conformément aux emplacements de la première station de base et des stations de base candidates ; et
la réception de ladite au moins une station de base supplémentaire renvoyée par le serveur.

6. Procédé selon l'une quelconque des revendications 1 à 5, dans lequel le positionnement du terminal mobile conformément aux emplacements de la première station de base et de ladite au moins une station de base supplémentaire comprend :

l'obtention d'une longitude et d'une latitude correspondant à chacun des emplacements de la première station de base et de ladite au moins une station de base supplémentaire ; et
le calcul des valeurs moyennes des longitudes et des latitudes correspondant aux emplacements de la première station de base et de ladite au moins une station de base supplémentaire, de manière à déterminer un emplacement du terminal mobile à l'instant de détection actuel.

7. Procédé selon la revendication 6, comprenant en outre :
l'ajout d'une valeur de coefficient de pondération à la longitude et à la latitude correspondant à chacun des emplacements de la première station de base et de ladite au moins une station de base supplémentaire conformément à l'instant de détection actuel et à l'instant de détection correspondant à ladite au moins une station de base supplémentaire, avant le calcul des valeurs moyennes.

8. Appareil de positionnement de station de base, comprenant :

un module de détermination de station de base (51) actuelle, configuré pour déterminer une première station de base actuellement détectée par un terminal mobile à un instant de détection actuel ;
un module de détermination de station de base supplémentaire (52), configuré pour déterminer au moins une station de base supplémentaire partir d'une liste de stations de base d'historique du terminal mobile, dans lequel un instant de détection de chacune de ladite au moins une station de base supplémentaire est dans une plage de temps prédéterminée par rapport à l'instant de détection actuel, et chacune de ladite au moins une station de base supplémentaire est dans une plage spatiale prédéterminée par rapport à la première station de base, et dans lequel la liste de stations de base d'historique comprend une pluralité de stations de base détectées par le terminal mobile à un instant avant l'instant de détection actuel, et les instants de détection de la pluralité de stations de base ; et
un module de positionnement (53), configuré pour positionner le terminal mobile à l'instant de détection actuel conformément aux emplacements de la première station de base et de ladite au moins une station de base supplémentaire.

9. Appareil selon la revendication 8, dans lequel
le module de détermination de station de base supplémentaire (52) comprend :

une première unité de détermination de station de base candidate, configurée pour effectuer une recherche dans la liste de stations de base d'historique pour trouver des premières stations de base candidates dont les instants de détection sont dans la plage de temps prédéterminée par rapport à l'instant de détection actuel ;
une deuxième unité de détermination de station de base candidate, configurée pour obtenir au moins un enregistrement d'historique de la première station de base parmi les premières stations de base candidates, et pour déterminer les stations de base entre ledit au moins un enregistrement d'historique de la première station de base et un enregistrement actuel de la première station de base dans la liste de stations de base d'historique en tant que deuxièmes stations de base candidates, dans lequel au moins un enregistrement d'une station de base différente de la première station de base existe entre ledit au moins un enregistrement d'historique de la première station de base et l'enregistrement actuel de la première station de base ; et
une unité de détermination de station de base supplémentaire, configurée pour déterminer ladite au moins une station de base supplémentaire conformément aux deuxièmes stations de base candidates.

**10.** Appareil selon la revendication 9, dans lequel l'unité de détermination de station de base supplémentaire est configurée pour :
retirer les stations de base répétées des deuxièmes stations de base candidates et exclure la première station de base, de manière à déterminer ladite au moins une station de base supplémentaire.

**11.** Appareil selon la revendication 9, dans lequel l'unité de détermination de station de base supplémentaire est configurée pour :

retirer les stations de base répétées des deuxièmes stations de base candidates et exclure la première station de base, de manière à générer des stations de base cibles ;
déterminer un nombre des stations de base cibles ;
déterminer les stations de base cibles en tant que dite au moins une station de base supplémentaire si le nombre de stations de base cibles est inférieur à un seuil prédéterminé.

**12.** Appareil selon la revendication 8, dans lequel
le module de détermination de station de base supplémentaire (52) est configuré pour :

effectuer une recherche dans la liste de stations de base d'historique pour trouver des stations de base candidates dont les instants de détection sont dans la plage de temps prédéterminée par rapport à l'instant de détection actuel ;
envoyer la première station de base et les stations de base candidates à un serveur, de sorte que le serveur détermine ladite au moins une station de base supplémentaire dans la plage spatiale prédéterminée par rapport à la première station de base, conformément aux emplacements de la première station de base et des stations de base candidates ; et
recevoir ladite au moins une station de base supplémentaire renvoyée par le serveur.

**13.** Appareil selon l'une quelconque des revendications 8 à 12, dans lequel le module de positionnement (53) comprend :

une unité d'obtention, configurée pour obtenir une longitude et une latitude correspondant à chacun des emplacements de la première station de base et de ladite au moins une station de base supplémentaire ; et
une unité de calcul, configurée pour calculer les valeurs moyennes des longitudes et des latitudes correspondant aux emplacements de la première station de base et de ladite au moins une station de base supplémentaire, de manière à déterminer un emplacement du terminal mobile à l'instant de détection actuel.

**14.** Appareil selon la revendication 13, dans lequel le module de positionnement (53) comprend en outre :
une unité d'ajout, configurée pour ajouter une valeur de coefficient de pondération à la longitude et à la latitude correspondant à chacun des emplacements de la première station de base et de ladite au moins une station de base supplémentaire conformément à l'instant de détection actuel et à l'instant de détection correspondant à ladite au moins une station de base supplémentaire, avant le calcul des valeurs moyennes.

**15.** Produit-programme dans lequel des instructions sont mémorisées qui, lorsqu'il est exécuté par un ou plusieurs processeurs d'un appareil, amène l'appareil à effectuer le procédé de positionnement de station de base selon l'une quelconque des revendications 1 à 7.

110

determining a first base station currently scanned by a mobile terminal at a current scanning moment

120

determining at least one assistant base station from a historical base station list of the mobile terminal

130

positioning the mobile terminal at the current scanning moment according to locations of the first base station and the at least one assistant base station

Fig. 1

210

determining a first base station currently scanned by a mobile
terminal at a current scanning moment

220

searching a historical base station list to find first candidate
base stations whose scanning moments are in a predetermined
time range with respect to the current scanning moment

230

obtaining one base station record by searching the first
candidate base stations in reverse order according to the time
sequence

240

it is determined
that whether the obtained base station record is the same
with the current
record of the first base
station

Yes

No

250

identifying the base station corresponding to the obtained base
station record as a second base station

260

obtaining another base station record by searching the first
candidate base stations in reverse order according to the time
sequence, starting from the second base station

270

it is determined
whether the obtained base station record is the same
with the current
record of the first base
station

No

Yes

280

determining base stations between the obtained base station
record and the current record of the first base station in the
historical base station list as second candidate base stations

290

determining at least one assistant base station according to the
second candidate base stations

2100

positioning the mobile terminal at the current scanning
moment according to locations of the first base station and the
at least one assistant base station

Fig. 2

310

determining a first base station currently scanned by a mobile
terminal at a current scanning moment

320

searching a historical base station list to find candidate base
stations whose scanning moments are in a predetermined time
range with respect to the current scanning moment

330

sending the first base station and the candidate base stations to
a server

340

receiving at least one assistant base station returned by the
server

350

positioning the mobile terminal at the current scanning
moment according to locations of the first base station and the
at least one assistant base station

Fig. 3

410

determining a first base station currently scanned by a mobile terminal at a current scanning moment

420

determining at least one assistant base station from a historical base station list of the mobile terminal

430

obtaining longitude and latitude information corresponding to each of the locations of the first base station and the at least one assistant base station

440

calculating average values of longitudes and latitudes corresponding to the locations of the first base station and the at least one assistant base station are calculated, so as to determine a location of the mobile terminal at the current scanning moment

Fig. 4

51

52

53

current base station determining module

assistant base station determining module

positioning module

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1480483 A